# DEMANDE DE BREVET EUROPEEN

(11) **EP 0 531 220 A2**
(43) Date de publication de la demande: **10.03.1993**
(21) Numéro de dépôt: 92402419.3
(22) Date de dépôt: 04.09.1992
(51) Int. Cl.: G03B 17/56, F16M 11/10, G01C 21/18

(54) **Dispositif permettant l'inclinaison d'une caméra de prise de vues autour de son axe optique**

(30) Priorité: 06.09.1991 FR 9111037
(71) Demandeur: Hervé, Jean-Pierre, F-94160 Saint Mandé (FR)
(72) Inventeur: Hervé, Jean-Pierre, F-94160 Saint Mandé (FR)
(74) Mandataire: Hud, Robert

(57) **Abrégé**

Le dispositif comprend, entre la tête de support et la caméra, une platine inférieure 5 fixée sur la tête 1 et qui porte, perpendiculairement à l'axe optique de la caméra, des rails de guidage arqués 16 centrés sur cet axe optique. Une platine supérieure 14, 17 portant la caméra, peut se déplacer le long des rails de guidage 16 de la platine inférieure 5, sous l'action d'une commande 8, en assurant le basculement de la caméra autour de son axe optique sensiblement confondu avec son centre de gravité.

La platine supérieure peut être constituée en deux éléments télescopiques comprenant un berceau inférieur 14 conçu pour se déplacer le long des rails 16 et un berceau supérieur 17, portant la caméra, qui se déplace le long de guides arqués du berceau inférieur 14.

Le dispositif permet l'inclinaison latérale aisée d'une caméra de prise de vues.

## Description

L'invention concerne la technique de prise de vues à l'aide d'une caméra et, plus particulièrement, les prises de vues nécessitant d'incliner latéralement la caméra autour de son axe optique.

Actuellement, lorsque l'opérateur doit procéder à des prises de vues nécessitant l'inclinaison latérale de la caméra (ce que les techniciens désignent familièrement par la formule : "casser la bulle"), il lui faut soit séparer cette dernière de la tête qui la supporte et effectuer un portage manuel de la caméra permettant son inclinaison latérale, mais cela pose des problèmes importants en raison du poids de la caméra et ne permet souvent pas de réaliser des images de bonne qualité statique, soit procéder à l'inclinaison latérale de l'ensemble formé par la tête de support et par la caméra mais il s'agit là d'une manoeuvre délicate car ledit ensemble se trouve déséquilibré et, en raison du poids important de la caméra, est difficile à maintenir.

Par le document US-A-2-364 363, il est connu un système de montage pour caméra qui permet d'appliquer à celle-ci un mouvement de rotation autour de plusieurs axes, chacun de ces axes passant par, le point nodal de l'objectif de la caméra. Ce système de montage comprend deux anneaux concentriques dont l'anneau intérieur, qui porte la caméra, peut tourner par rapport à l'anneau extérieur fixe pour effectuer un mouvement d'inclinaison latérale.

Dans ce document US-A-2 364 363 l'anneau intérieur porte la caméra par l'intermédiaire d'un ensemble de rotation autour d'un axe horizontal. Lorsqu'on pointe la caméra vers le bas par rotation autour de cet axe horizontal, l'inclinaison latérale due au système des anneaux concentriques fait alors décrire à l'axe optique de la caméra un cône et non pas une rotation sur lui-même.

La présente invention a pour objet de remédier aux inconvénients présentés par les systèmes conventionnels d'inclinaison latérale d'une caméra de prise de vues et elle propose à cet effet un dispositif, destiné à se placer entre la tête de support et la caméra, qui assure avec une grande facilité et une grande précision, sans effort physique particulier et sans aucun déséquilibre de la caméra, l'inclinaison latérale de la caméra sur son axe optique quels que soient les mouvements d'azimut (mouvement panoramique gauche-droite) et de site (mouvement panoramique haut-bas) de la tête de support sur laquelle il est fixé. Cette inclinaison latérale pouvant s'effectuer sur une plage angulaire d'environ 45° de part et d'autre de la position neutre.

Selon l'invention le dispositif comprend des moyens de guidage arqués et un ensemble de support de la caméra qui coopère avec lesdits moyens de guidage arqués en assurant le basculement, dans un plan vertical, dudit ensemble de support de la caméra, et il se caractérise en ce que lesdits moyens de guidage arqués sont portés par une platine inférieure fixée sur la tête et ont pour centre l'axe optique de la caméra, ledit ensemble de support étant constitué par une platine supérieure à laquelle est rigidement fixée la caméra et qui coopère avec lesdits moyens de guidage arqués, et des moyens d'actionnement étant prévus sur la platine inférieure pour assurer le basculement de la platine supérieure et de la caméra qu'elle porte autour de l'axe optique de la caméra.

Selon une forme d'exécution préférée du dispositif de l'invention, le déplacement de la platine supérieure est assuré par un organe de commande qui se déplace transversalement par rapport à la platine inférieure en communiquant à la platine supérieure, au moyen d'une transmission par pignons et chaînes, un déplacement le long desdits organes de guidage arqués qui est deux fois plus grand que celui des organes de commande.

Afin d'obtenir une inclinaison importante de la platine supérieure (de l'ordre de 45°) sans que le dispositif présente un encombrement trop grand en position centrale neutre, l'invention propose avantageusement de réaliser la platine supérieure en deux éléments télescopiques (un berceau supérieure et un berceau inférieur) qui sont exactement superposés en position centrale neutre et qui, sous l'action de l'organe de commande, se déplacent simultanément à des vitesses différentes telles que le berceau supérieur, portant la caméra se déplace deux fois plus vite que le berceau inférieur coopérant avec la platine inférieure.

On comprend donc que, lorsque l'opérateur doit effectuer un cadrage de travers c'est-à-dire lorsqu'il doit incliner latéralement la caméra, il lui suffit de commander par rotation de la manivelle le déplacement simultané des berceaux inférieur et supérieur de la platine supérieure jusqu'à ce que le berceau supérieur et la caméra qu'il porte aient atteint l'angle d'inclinaison désiré par rapport à la position neutre de départ, angle qui peut être repéré sur des graduations portées par la platine inférieure fixe.

On voit que, lorsque la caméra bascule ainsi sur son centre de gravité (sensiblement confondu avec l'axe optique), l'ensemble formé par la caméra et la tête de support reste dans une position de stabilité maximale permettant sans inconvénient d'effectuer ce mouvement pendant que la caméra filme.

Pour bien faire comprendre le dispositif selon l'invention on en décrira ci-après, à titre d'exemple sans caractère limitatif, une forme d'exécution préférée en référence au dessin schématique annexé dans lequel :
la figure 1 est une vue très schématique montrant la position du dispositif selon l'invention, entre la tête de support et la caméra ;
la figure 2 est, à plus grande échelle, une vue en bout du dispositif d'inclinaison de la figure 1 représenté dans une position d'inclinaison maximale ;
la figure 3 est une vue de côté du dispositif des figures 1 et 2 ;
la figure 4 est une coupe transversale prise selon la ligne IV-IV de la figure 3, le dispositif étant représenté dans sa position centrale d'inclinaison nulle; et
la figure 5 est une coupe longitudinale prise selon la ligne V-V de la figure 4.

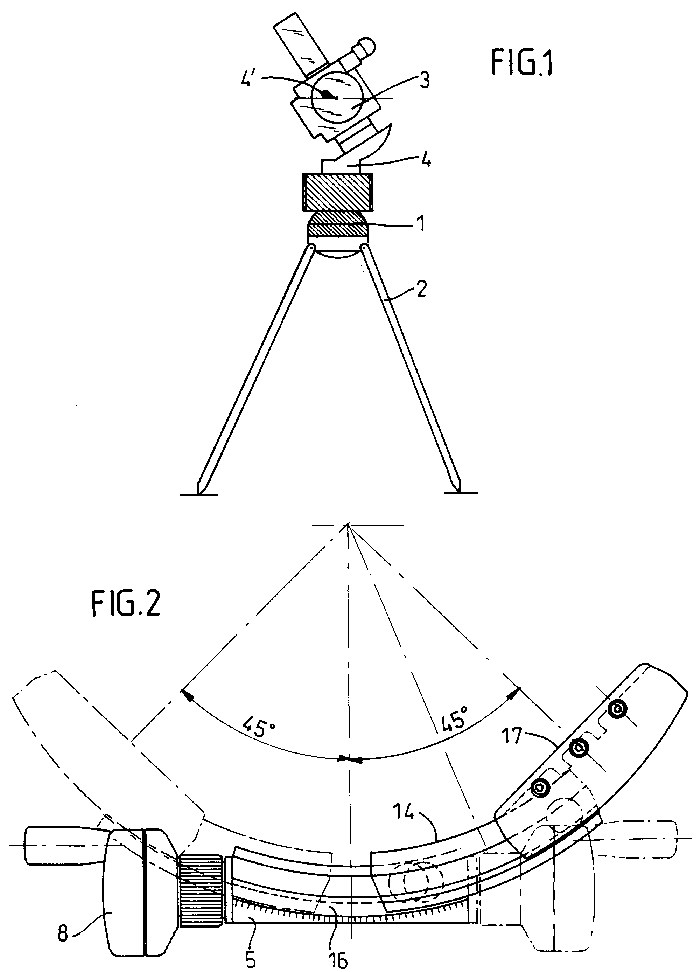

En référence à la figure 1 on a schématisé en 1 une tête de support pour caméra, reposant sur le sol par des pieds d'appui 2. Entre la tête 1 et la caméra 3 est inséré un dispositif d'inclinaison 4 qui permet d'incliner latéralement la caméra 3 en faisant basculer celle-ci autour de son axe optique 4′ et de son centre de gravité sensiblement confondus.

Comme représenté plus en détail aux figures 2 à 5, le dispositif d'inclinaison 4 comprend une platine inférieure 5 dont la base plane est destinée à être fixée par des vis à l'extrémité supérieure de la tête 1. Par l'intermédiaire de roulements 6 la platine inférieure 5 supporte une vis sans fin 7 disposée au milieu de la platine 5 en étant orientée perpendiculairement à l'axe longitudinal de celle-ci. A une extrémité de la vis sans fin 7 est fixée une manivelle amovible 8, celle-ci pouvant aisément être démontée et être fixée à l'extrémité opposée de la vis 7. Le long de cette dernière est monté pour se déplacer un écrou à bille 9 qui porte sur chaque côté une glissière verticale 10 le long de laquelle peut coulisser un axe 11 libre en rotation et qui porte à son extrémité un pignon 12. Avec chaque pignon 12 engrêne une chaîne 13 fixée à la platine inférieure 5 suivant un arc de cercle dont le centre est l'axe de rotation du dispositif. Une autre chaîne 13′ qui est solidaire de la partie inférieure d'un berceau inférieur 14 engrène également avec le pignon 12. Ce berceau inférieur 14 se déplace le long de glissières courbes 16 portées par la platine inférieure 5 et centrées sur l'axe optique 4′ de la caméra. Au-dessus du berceau inférieur 14 se trouve un berceau supérieur 17, ou berceau caméra, dont la face supérieure plane présente des lumières 18 orientées transversalement pour la fixation de la caméra au moyen de vis 19. A chaque extrémité du berceau inférieur 14, deux axes 20 en rotation libre portent chacun un pignon 21 qui engrêne avec une chaîne sans fin 22 dont la partie inférieure est solidaire de la platine inférieure 6 grâce à une couronne dentée 22′ et dont la partie supérieure est solidaire du berceau supérieur 17 par une couronne dentée 22˝. A ses extrémités le berceau supérieur 17 est guidé dans des glissières courbes portées par le berceau inférieur 14 et centrées sur l'axe optique de la caméra 3.

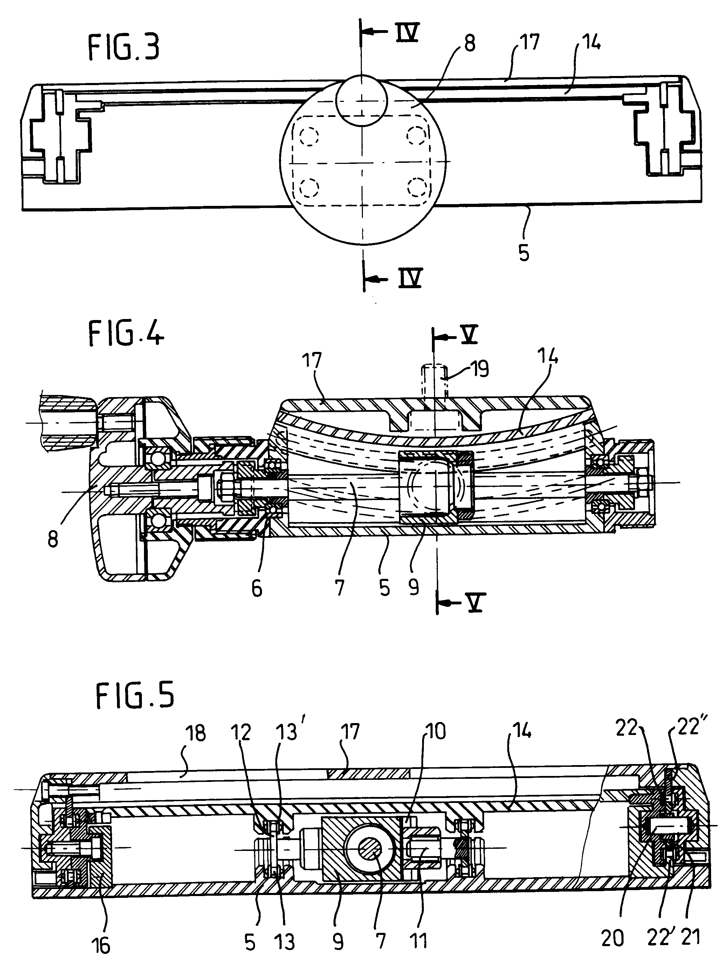

Le fonctionnement du dispositif est le suivant. L'ensemble mobile constitué par le berceau inférieur 14 et le berceau supérieur 17 étant dans sa position centrale d'inclinaison nulle représentée à la figure 4, dans laquelle les berceaux 14 et 17 sont exactement superposés à la platine inférieure 5, l'opérateur applique à la manivelle 8 une rotation dans l'un ou l'autre sens suivant le côté où il désire faire basculer la caméra 3 autour de son axe optique. La rotation de la manivelle 8 entraîne, à partir de sa position centrale, un déplacement "d" de l'écrou 9 le long de la vis sans vis 7 et ce déplacement, sous l'effet du système de transmission constitué, de chaque côté de l'écrou 9, par l'axe 11, le pignon 12 et les arcs de chaîne 13 et 13′, communique au berceau intermédiaire 14 un déplacement d'amplitude "2d" le long des glissières courbes 16 de la platine 5 résultant en un mouvement de bascule autour de l'axe optique de la caméra portée par le berceau supérieur 17.

Simultanément le système de transmission porté par le berceau inférieur 14 et constitué par les couples de pignons 21 et les chaînes sans fin 22 imprime au berceau supérieur 17 portant la caméra 3 un déplacement d'amplitude "4d" c'est-à-dire quatre fois supérieur à celui de l'écrou 9, ce déplacement s'effectuant le long des glissières courbes portées par le berceau 14, pour obtenir la position représentée à la figure 2.

On voit ainsi que la caméra 3, portée par le berceau supérieur 17, bascule sur son centre de gravité ce qui permet, quelle que soit l'inclinaison, de conserver à l'ensemble formé par la tête 1 et la caméra 3 une stabilité maximale. La disposition télescopique des berceaux 14 et 17 permet d'obtenir un angle d'inclinaison élevé avec un encombrement faible.

Comme on le voit en particulier à la figure 4, les vis 19 permettant le démontage de la caméra 3 (auxquelles on doit accéder par dessous) ne sont pas accessibles dans la position d'inclinaison nulle qui y est représentée. Pour pouvoir procéder au démontage, on devra amener au préalable le dispositif dans une position d'inclinaison latérale maximale (voir figure 2) dans laquelle le dessous du berceau supérieur 17 se trouve alors accessible pour procéder au dévissage.

On comprendra que la description ci-dessus a été donnée à simple titre d'exemple, sans caractère limitatif, et que des adjonctions ou des modifications constructives pourraient y être apportées sans sortir du cadre de l'invention. On comprendra en particulier que, au lieu d'être indépendante comme on l'a décrit, la platine inférieure pourrait être intégrée dans la tête de support. On comprendra aussi que le dispositif selon l'invention pourrait être équipé d'un ensemble comprenant un gyroscope et un moteur électrique, afin d'assurer une correction automatique de l'assiette (horizontale) lorsque la caméra est montée sur un support mobile tel qu'un bateau, une voiture de travelling, ou une armature de portage connue sous le nom de "steadicam".

## Revendications

1. Dispositif d'inclinaison latérale d'une caméra de prise de vues (3), comprenant des moyens de guidage arqués (16) et un ensemble de support (14, 17) de la caméra (3) qui coopère avec lesdits moyens de guidage arqués (16) en assurant le basculement, dans un plan vertical, dudit ensemble de support (14, 17) de la caméra (3), caractérisé en ce que lesdits moyens de guidage arqués (16) sont portés par une platine inférieure (5) fixée sur la tête (1) et ont pour centre l'axe optique (4′) de la caméra (3), ledit ensemble de support étant constitué par une platine supérieure (14, 17) à laquelle est rigidement fixée la caméra (3) et qui coopère avec lesdits moyens de guidage arqués (16), et des moyens d'actionnement (8, 9, 10) étant prévus sur la platine inférieure (5) pour assurer le basculement de la platine supérieure (14, 17) et de la caméra (3) qu'elle porte autour de l'axe optique (4') de la caméra (3).

2. Dispositif selon la revendication 1, caractérisé en ce que lesdits moyens d'actionnement comprennent une vis sans fin (9) montée en rotation libre transversalement à l'axe de la platine inférieure (5) le long de laquelle se déplace un écrou (9) portant de chaque côté un axe (11) perpendiculaire à la direction de la vis sans fin (7) et relié par un système de transmission à pignon (12) et arcs de chaîne (13, 13′) à la platine supérieure (14,17) pour communiquer à celle-ci le mouvement de translation de l'écrou (9).

3. Dispositif selon la revendication 2, caractérisé en ce que lesdits arcs de chaîne (13, 13′) sont fixés respectivement à la partie supérieure à la platine inférieure (5) et à la partie inférieure de la platine supérieure (14,17) en communiquant à cette dernière un déplacement d'amplitude double de celui de l'écrou (9).

4. Dispositif selon l'une quelconque des revendications 1 à 3, caractérisé en ce que la platine supérieure est constituée en au moins deux éléments télescopiques, comprenant un berceau inférieur (14) se déplaçant le long des moyens de guidage arqués (16) de la platine inférieure (5) et un berceau supérieur (17) se déplaçant le long d'un moyen de guidage arqué porté par le berceau inférieur (14) et portant la caméra (3).

5. Dispositif selon la revendication 4, caractérisé en ce que la commande du déplacement du berceau supérieur (17) est obtenue par un système de transmission qui comprend, de chaque côté, deux pignons (21) en rotation libre sur des axes (20) portés par le berceau inférieur (14) et une chaîne sans fin (22) engrénant avec lesdits pignons (21) en ayant sa partie inférieure solidaire de la platine inférieure (5) et sa partie supérieure solidaire dudit berceau supérieur (17), de sorte que l'amplitude du déplacement du berceau supérieur (17) est le double du déplacement du berceau inférieur (14) et quatre fois le déplacement de l'écrou (9).

6. Dispositif selon l'une quelconque des revendications 1 à 5, caractérisé en ce que la platine inférieure (5) fait partie intégrante de la tête (1).

7. Dispositif selon l'une quelconque des revendications précédentes, caractérisé en ce qu'il comporte un ensemble constitué d'un gyroscope et d'un moteur électrique pour assurer une correction automatique de l'assiette de la caméra.
